# EUROPEAN PATENT APPLICATION

(11) **EP 2 045 993 A1**
(43) Date of publication of application: **08.04.2009**
(21) Application number: 07767097.4
(22) Date of filing: 13.06.2007
(51) Int. Cl.: H04L 29/06, H04L 1/00

(54) **TRANSMISSION PARAMETER MODIFICATION CONTROL METHOD AND RADIO BASE STATION**

(30) Priority: 19.06.2006 JP 2006169458
(71) Applicant: NTT DoCoMo, Inc., Chiyoda-ku Tokyo 100-6150 (JP)
(72) Inventor: HARADA, Atsushi, Tokyo 100-6150 (JP); ISHII, Minami, Tokyo 100-6150 (JP); ABETA, Sadayuki, Tokyo 100-6150 (JP)
(74) Representative: HOFFMANN EITLE
(86) International application number: PCT/JP2007/061863
(87) International publication number: WO 2007/148573

(57) **Abstract**

A disclosed method of controlling a change of a transmission parameter including the steps of generating a control data unit which does not include a specification of the change timing for changing a parameter value of the transmission parameter for which processing all within a certain layer or sublayer is possible; transmitting the control data unit only in a first half of a transmission frame; and conducting transmission and/or reception, at a timing of a frame following a frame in which the control data unit was transmitted, based on the changed transmission parameter.

## Description

### BACKGROUND OF THE INVENTION

### 1. Field of the Invention

The present invention relates generally to a radio communications control technique and specifically to an efficient report timing control for reporting a transmission parameter change.

### 2. Description of the Related Art

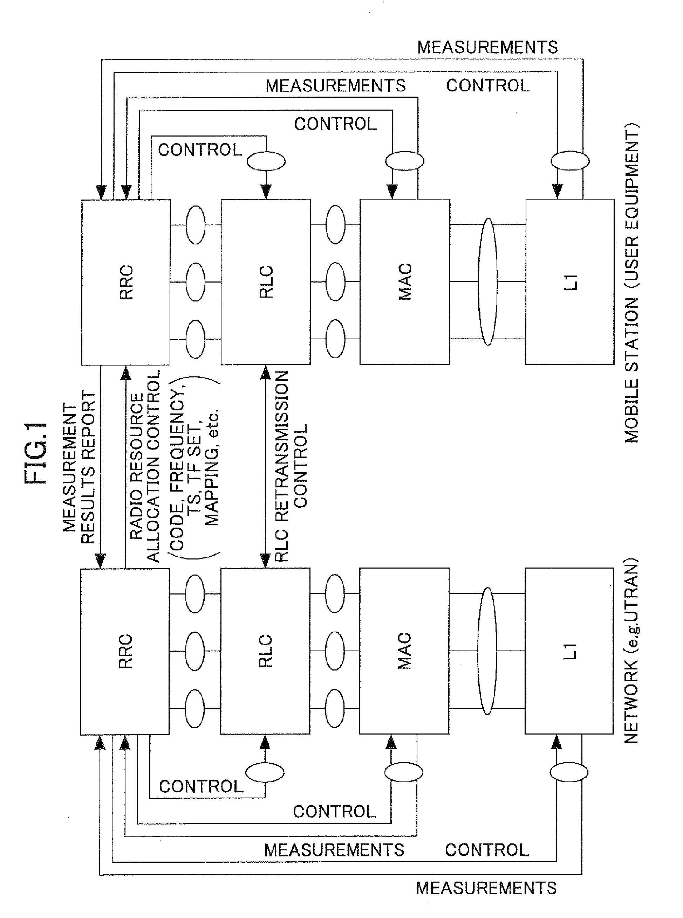

In a third-generation radio access network, a Layer 3 RRC (radio resource control) entity sets and controls radio resources based on a radio parameter (code, frequency, time slot, transport format, mapping, etc.) determined from measurement results reported from a mobile station or a user terminal (UE), as shown in FIG. 1. In a Layer 2 RLC layer, retransmission is controlled using an RLC protocol. A MAC layer performs priority control, scheduling, and mapping of a logical channel to a transport channel to arbitrate between a user and a radio bearer.

When a need arises to change the radio parameter, the change is instructed by upper layer signaling (RRC). In a third-generation communications technique, an activation time may be specified by the RRC signaling to explicitly specify a timing of changing the radio parameter.

In other words, in a change report by RRC, the change timing as well as what change is made of the radio parameter are included as report information. When the change timing is almost simultaneous with the report, in other words, when there is a need to switch immediately, information elements indicating such need is added for reporting.

On the other hand, scheduling control using a MAC control PDU is being studied in expectation of a reduced process delay (see Non-patent Document 1). The MAC process is expected to lead to a reduced process delay as hardware processing by a baseband unit may be expected. For example, information related to scheduling is generated as a MAC control message, which is transmitted as a MAC-PDU payload. The MAC-PDU is directly interpreted and processed at a MAC entity of a mobile station. The MAC-PDU (protocol data unit) is a protocol data unit which is processed all within the MAC layer.
Non-Patent Document 1
   IEEE Std 802.16TM-2004 (section 6.3.2.3)

### SUMMARY OF THE INVENTION

### [Problem(s) to be solved by the Invention]

However, for controlling a change of a transmission parameter such as scheduling using a MAC control PDU, explicitly reporting the change timing as an information element of the control PDU may cause an increased message size. As a result, process delay is added. Such an issue as described above will be problematic not only in the third-generation radio communications system, but also in an LTE (long term evolution), a further-evolved third generation system. In particular, in the LTE radio communications system, realizing a higher-speed and greater-capacity radio communications is called for, so that a more efficient technique is desired also for controlling change and reports of the transmission parameter.

The present invention aims to provide a novel method of controlling a change of a transmission parameter, which reduces control load and control delays, which exists in related-art techniques for specifying a change timing.

Moreover, the present invention aims to provide a radio base station which controls the change of the transmission parameter as described above.

### [Means for solving the Problem]

In order to solve the problem as described above, the present invention is based on the following concepts:
(1) With respect to a transmission parameter for which processing all within a certain layer or sublayer is possible, a control protocol data unit (PDU) of the layer is used to report a change of the parameter value to a mobile station. Here, only what change is made is reported without incorporating, into the control PDU, information specifying the change timing;
(2) The control PDU is transmitted only in a first half of a frame; and
(3) Starting in a frame following the frame in which the control PDU was transmitted, the process transitions to transmitting and/or receiving the changed parameter value.

For example, for changing a transmission parameter for which processing all within a MAC layer is possible, what change is made of the transmission parameter is reported in a MAC control PDU. The transmission parameter for which processing all within the MAC layer is possible includes a TTI length in case of adopting a variable TTI length for a transmission time interval, an instruction for transitioning to persistent scheduling (fixed resource allocation) for conducting VoIP communications, and an activity level.

More specifically, in a first aspect, the method of controlling a report timing of a transmission parameter includes:
(a) generating a control data unit (control PDU) which does not include specifying a change timing for changing a parameter value of a transmission parameter for which processing all within a certain layer or sublayer is possible;
(b) transmitting the control data unit only in a first half of a transmission frame; and
(c) transmitting and/or receiving, at a timing of a frame following a frame in which the control data unit was transmitted, data based on the changed transmission parameter.

In a preferred embodiment, when a control PDU is generated in a second half of a transmission frame (#N-1), the control PDU is transmitted in a first half of the following transmission frame (#N). In this case, transmitting and/or receiving the changed parameter starts in the further following transmission frame (#N+1).

In another preferred embodiment, when the control PDU is not received by a mobile station, retransmitting is performed in a second half of a frame in which the control PDU was transmitted.

In a second aspect, a radio base station which performs the report timing control as described above is provided. The radio base station includes:
(a) a controller which instructs changing a parameter value for a transmission parameter for which processing all within a certain layer or sublayer is possible;
(b) a control data unit generator which, based on the instruction of the controller, indicates the changed parameter and generates a control data unit which does not include specifying a change timing; and
(c) a transmission processor which transmits the control data unit only in a first half of a transmission frame.

In a preferred embodiment, a retransmission controller is further provided which instructs, when retransmitting of a control data unit such as a control PDU is needed, retransmitting, in a second half of a frame in which the control PDU was transmitted.

The features of the method of controlling the change to the transmission parameter and the radio base station as described above are applicable to a network which adopts an arbitrary radio communications technique and to a base station used therein.

### [Advantage of the Invention]

The features as described above make it possible to reduce the control load and control delay which existed with the related-art technique of specifying activation time information at the time of reporting a change of a transmission parameter.

### BRIEF DESCRIPTION OF THE DRAWINGS

FIG. 1 is a schematic drawing illustrating a related-art C-plane control model;
FIG. 2 is a schematic drawing illustrating a control model of a radio communications system (an LTE radio communications system, for example) to which the present invention is applied;
FIG. 3 is a drawing for explaining a timing control of reporting a change of a transmission parameter according to an embodiment of the present invention;
FIG. 4 is a flowchart illustrating an operation of a radio base station according to an embodiment of the present invention; and
FIG. 5 is a schematic block diagram of the radio base station according to an embodiment of the present invention.

### DESCRIPTION OF THE PREFERRED EMBODIMENTS

### [Description of Notations]

1 Radio base station
10 RRC entity
20 RLC processing block
21 RLC layer receive processor
22 RLC layer transmit processor
30 MAC processing block
31 MAC layer receive processor
32 MAC layer transmit processor
33 MAC controller
34 Scheduler
35 Retransmission controller
36 MAC control PDU generator (control data unit generator)
40 Physical layer processing block
41 Physical layer receive processor
42 Physical layer transmit processor
43 Physical layer controller

### [Best Mode of Carrying Out the Invention]

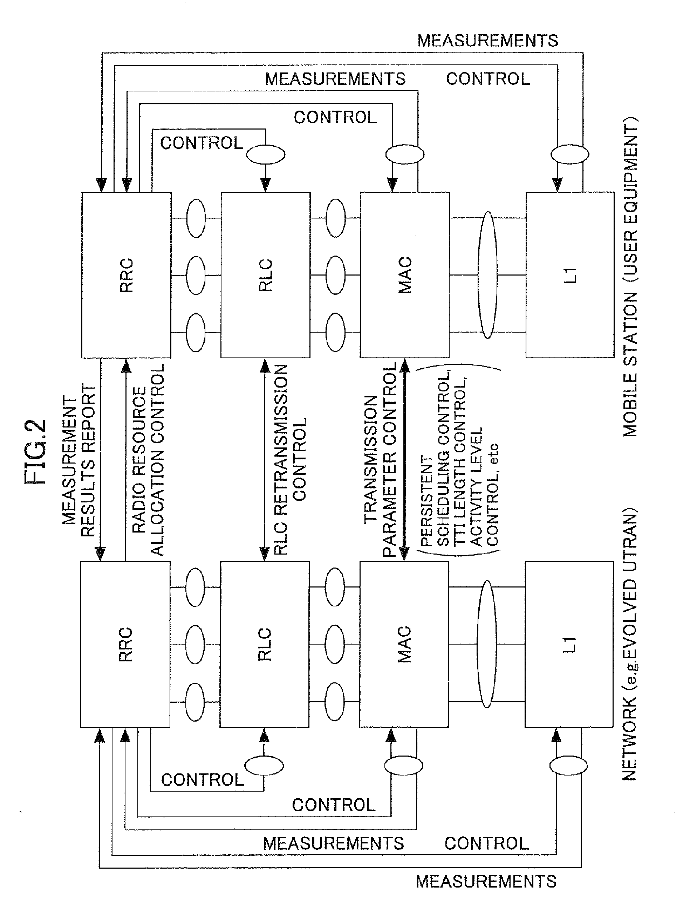

A description is given below with regard to preferred embodiments of the present invention, with reference to the drawings. FIG. 2 illustrates an example of a control model of an LTE wireless communications system as an example to which the present invention is applied. A Layer 3 RRC (radio resource control) entity sets, maintains, and releases an RRC connection between a mobile station or a user terminal (UE), and a network (Evolved UTRAN, for example), and sets a radio resource (communications parameter) for the RRC connection.

In an RLC layer, which is a Layer 2 sublayer, an RLC connection between the mobile station (UE) and the network is set/released, and retransmission is controlled based on an RLC retransmission control protocol. Moreover, an upper layer PDU is transmitted, and segmentation according to a transport block (TB) size is performed.

The MAC layer, which is a Layer 2 sublayer, reports, to a mobile station (UE), a change of a parameter value with respect to a transmission parameter for which processing all within the MAC layer is possible. The transmission parameter for which processing all within the MAC layer is possible includes an instruction for transitioning to persistent scheduling, a TTI length in case of variably controlling a transport time interval (TTI), and an activity level.

Persistent scheduling is a scheduling technique which allocates, to constant speed and low rate radio communications such as VoIP communications, radio resources in constant intervals on a fixed basis. Reporting of transitioning to persistent scheduling is sent, in a MAC-PDU, directly to a MAC entity of a mobile station, where it is interpreted.

For example, when information on allocating data is reported to the mobile station over a downlink shared control channel (L1/L2 control channel), the TTI length is changed in order to set a TTI length according to a size of a packet reported. In a method of splitting a packet to be transmitted according to a predetermined TTI length (one subframe, for example), as the load of signaling of a control signal could increase, the TTI length is changed according to the packet size.

In the embodiments of the present invention, these transmission parameter changes are reported using a MAC control PDU as a control data unit, making it possible to process directly in the MAC layer between the radio base station and the mobile station.

In the related art, for changing a specification of a communications parameter in the RRC layer, information specifying at which timing change is to be made is transmitted to the mobile station along with the changed parameter value. However, a smaller size of a message to be included in a payload of a MAC control PDU is more desirable. Thus, in the present embodiments, the information specifying at which timing the change is to be made on a MAC transmission parameter (transmission parameter related to scheduling) is not included in the MAC control PDU, so that only the changed parameter value is placed in the payload.

Then, the timing for transmitting the MAC control PDU is restricted to a first half of the frame, and a change of a configuration that was reported in the MAC control PDU is specified to be effective from the following frame timing.

In other words, if a MAC control PDU which reports a changed transmission parameter value is transmitted, the radio base station controls communications with the new parameter value starting from the further following frame. The mobile station synchronously receives a signal with the changed parameter value in a timing of a frame following a frame in which the MAC control PDU was received.

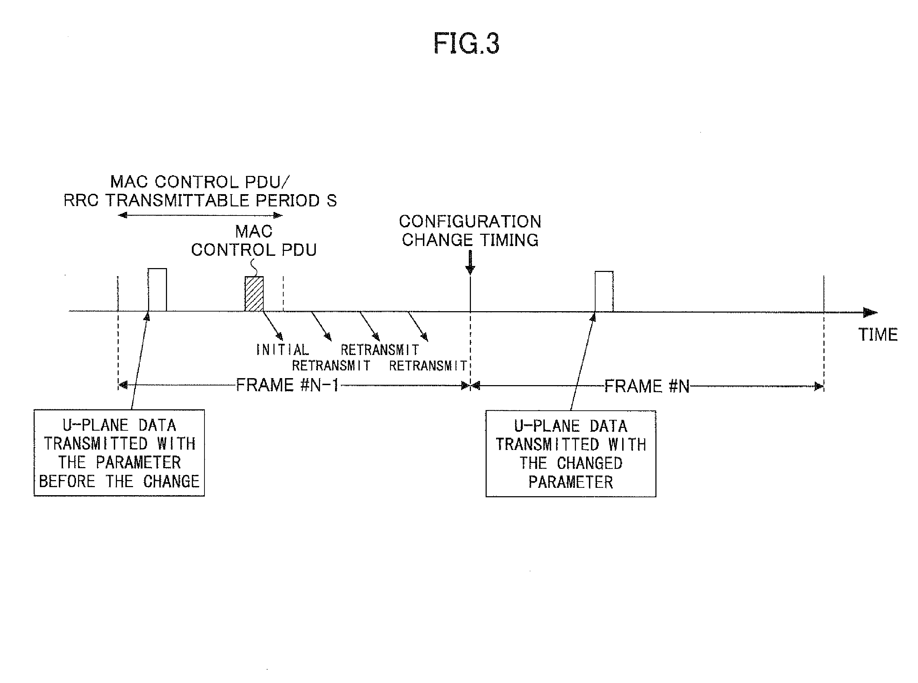

FIG. 3 is a drawing for explaining a transmission timing of a MAC control PDU. A transmission timing is controlled on a frame by frame basis. One frame, which is 10 ms, for example, includes twenty 0.5 ms subframes.

In each frame, a period S for which a MAC control PDC may be transmitted is restricted to a first half of the frame. Transmitting of not only the MAC control PDU, but also a RRC-PDU may be restricted to the first half of the frame. The transmission timing of these PDUs are restricted to the first half of the frame in view of the maximum number of times of retransmitting a HARQ (hybrid automatic repeat request).

For example, consider a case such that, immediately following a transmission of user data with a parameter (a predetermined TTI length, or normal scheduling) prior to a change, a need arises to change the parameter. Then, a MAC control PDU which indicates the changed parameter value is generated and initially transmitted to the mobile station in the first half of the frame.

If the initial transmission is successful, in other words, if Ack is received from a mobile station, user data is transmitted in the following frame #N based on the changed parameter value (based on the changed TTI length or on the persistent scheduling) . At the mobile station, the process transitions to a receiving process based on the changed parameter in a frame #N following the frame in which the MAC control PDU was received.

If the transmission of the MAC control PDU to the mobile station fails, in other words, if an acknowledgement is not received from the mobile station within a certain time period, the MAC control PDU is transmitted in the remaining interval of the frame. The time period corresponding to the maximum number of times of retransmission falls within the second half of the frame. The acknowledgement (ACK) from the mobile station for the MAC control PDU may be replaced with a HARQ-Ack.

If the MAC control PDU is generated in the second half of the frame #N-1, the generated MAC control PDU is transmitted in the first half of the following frame #N. In this case, transmitting and/or receiving the changed parameter starts in the further following transmission frame #N+1.

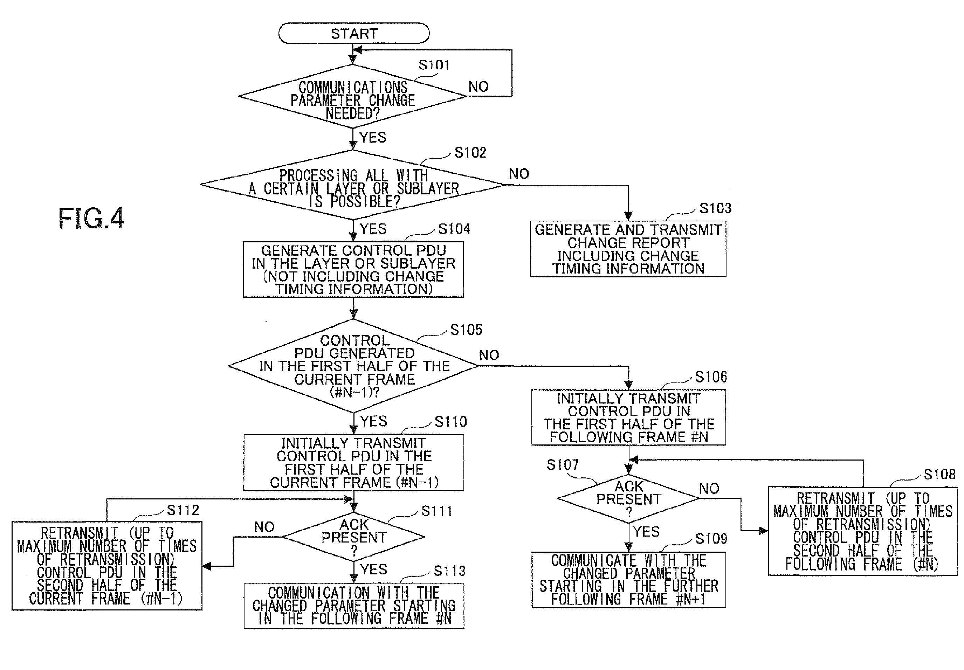

FIG. 4 is a flowchart illustrating the flow of the process performed by the radio base station. First, in step S101, it is determined whether a communications parameter needs to be changed. Whether the communications parameter needs to be changed is determined based on required QoS and measurement results reported from a user terminal. If the change is needed (YES in S101), then in step S102, it is determined whether it is possible to process the transmission parameter all within an arbitrary layer or sublayer. For example, a transmission time interval (TTI), or a parameter on a type of scheduling for resource allocation is the transmission parameter for which processing all within the MAC layer is possible. Moreover, a parameter used for QoS setting control or a retransmission control setting parameter for controlling retransmission in the RLC layer is a transmission parameter for which processing all within the RLC layer is possible.

If processing all within the layer or sublayer is not possible (NO in S102), a change report including information indicating timing for changing is generated and reported in an upper layer signaling in S103. If processing all within the layer or sublayer is possible (YES in S102), a control data unit (PDU) in the layer or sublayer is generated in S104. Here, information indicating a change timing is not included in the generated control PDU.

Next, it is determined whether the control PDU was generated in the first half of the current frame (#N-1) in S105. If it is determined that the control PDU was generated in the first half (YES in S105), the control PDU is initially transmitted in the first portion of the current frame (#N-1). In S111, it is determined whether an ACK is present within a certain time period. If the ACK is present (YES in S111), the process proceeds to step S113, where communication is conducted with the changed parameter, starting in the following frame #N. If the ACK is not present (NO in S111), the process proceeds to step S112, where the control PDU is retransmitted in the second half of the current frame #N-1. The retransmitting is performed for a maximum number of times for retransmitting within the second half of the frame.

On the other hand, if the control PDU is generated in the second half of the current frame #N-1 (NO in S105), the process proceeds to step S106, where the generated control PDU is initially transmitted in a first half portion of the following frame #N. In step 107, it is determined whether an ACK is present. If the ACK is present (YES in S107), communication is conducted with the changed parameter, starting in the further following frame #N+1 in S109. If the ACK is not present within a certain time period (NO in S107), the control PDU is retransmitted for a maximum number of times for retransmitting within the second half of the following frame #N in S108.

In this way, a MAC control PDU may be configured with a simple message indicating a changed parameter value and transmitted with the transmission timing thereof restricted to a first half of a frame to secure a retransmission interval. The radio base station and the mobile station may be synchronized in a following frame timing to transition to transmitting and/or receiving with the changed parameter value.

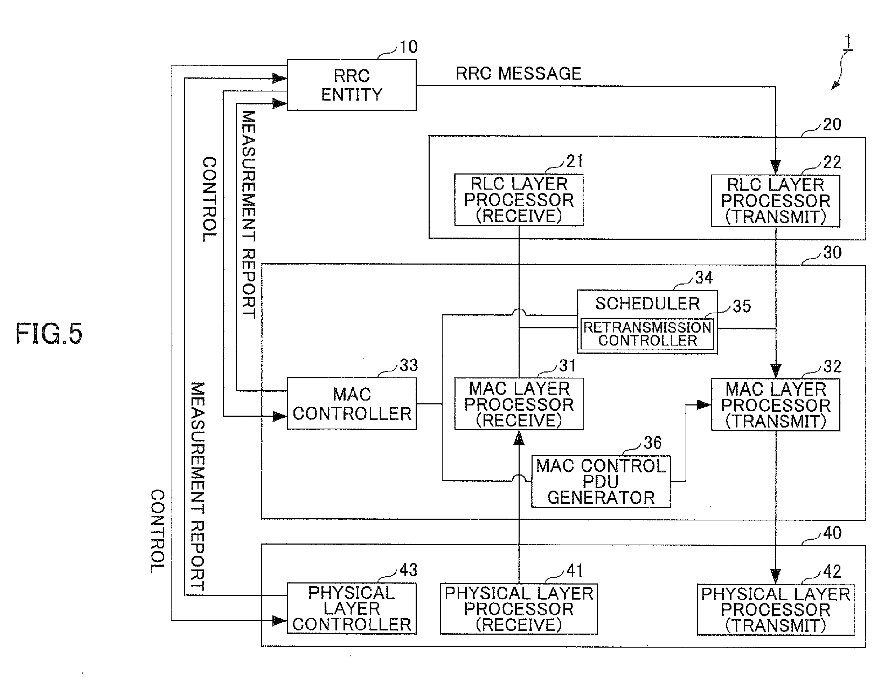

FIG. 5 is a schematic block diagram of a radio base station according to an embodiment of the present invention. A radio base station 1 includes an RRC entity 10, which is an RRC layer process block; an RLC process block 20; a MAC process block 30; and a physical layer process block 40.

A physical layer controller 43 reports, to the RRC entity 10, measurement results such as SIR received from the mobile station. Based on the reported results, the RRC entity 10 generates signals which control MAC and physical layers and supply the signals to a MAC controller 33 and the physical layer controller 43. Moreover, the RRC entity 10 generates an RRC message including information such as an available radio bearer so as to input the RRC message to an RLC layer transmit processor 22. The RRC message as described above is transmitted to a mobile station via the MAC layer transmit processor 32 and the physical layer transmit processor 42.

When it becomes necessary to change a TTI length or to transition to persistent scheduling, the MAC controller 33 determines the changed transmission parameter value so as to report the determined value to a MAC control PDU generator 36, which generates a MAC control PDU including the changed transmission parameter. The MAC control PDU, which does not include a specification of a parameter change timing, is transmitted by the MAC layer processor 32 in the first half of a frame. When the MAC control PDU is generated in the second half of the frame, it is transmitted in a first half of the following frame.

If the MAC control PDU is transmitted, the radio base station 1 transmits, at the following frame timing, U-plane data based on the changed parameter.

A physical layer receive processor 41 receives an acknowledgement (ACK/NACK) from the mobile station. A MAC layer receive processor 31 determines whether retransmitting is needed based on the acknowledgment. Moreover, for the MAC control PDU, it is determined that retransmitting is needed if there is no acknowledgment within a certain time period after transmission.

The determined result is input to a retransmission controller 35 of a scheduler 34. The retransmission controller 35 schedules for retransmitting according to the retransmitting determination. A process number used in retransmitting is determined by the RRC entity 10 and reported to the scheduler 34 via the MAC controller 33.

Using the configuration as described above, for a transmission parameter for which processing all within the MAC layer is possible, a parameter change is reported in a MAC control PDU in a manner restricted to reporting within a first half of the frame. Transitioning to transmitting and/or receiving with the changed parameter in the following frame timing is possible even without a secured retransmitting interval of the MAC control PDU in the second half of the frame and information specifying change timing. As a result, control load and control delay due to a transmission parameter change are reduced.

Changing a transmission parameter for which processing all within an RLC layer is possible, for example, changing a parameter for use in QoS setting control or in controlling retransmission in the RLC layer may also be arranged such that an RLC control PDU without a specification of a change timing is generated and transmitted only in a first half of a frame. In the RLC processing block 20 (not specifically shown for this case), which has an RLC control PDU generator, a retransmission controller, and an RLC controller which controls QoS, as the MAC processing block 30, a measurement report and a control signal are delivered between the RLC controller and the RRC entity. The generated RLC control PDU is received at the mobile station (user terminal), and an RLC processor of the mobile station directly processes the received PDU.

The method and configuration as described above may be applicable to any radio communications systems which use a communications parameter for which processing all within a certain layer or sublayer is possible, regardless of any differences in communications techniques adopted by such systems.

The present application claims priority based on Japanese Patent Application No. 2006-169458 filed on June 19, 2006, the entire contents of which are hereby incorporated by reference.

## Claims

1. A method of controlling a change of a transmission parameter, including the steps of:
generating a control data unit which does not include a specification of the change timing for changing a parameter value of the transmission parameter for which processing all within a certain layer or sublayer is possible;
transmitting the control data unit only in a first half of a transmission frame; and
conducting transmission and/or reception, at a timing of a frame following a frame in which the control data unit was transmitted, based on the changed transmission parameter.

2. The method of controlling the change of the transmission parameter as claimed in claim 1, wherein the layer or sublayer is a MAC layer, and wherein a MAC control protocol data unit (PDU) is generated, which does not include a specification of a change timing for changing a parameter value of a transmission parameter for which processing all within the MAC layer is possible.

3. The method of controlling the change of the transmission parameter as claimed in claim 2, wherein the transmission parameter for which processing all within the MAC layer is possible includes a TTI length in case of adopting a variable transmission time interval (TTI), an instruction for transitioning to persistent scheduling in case of performing persistent scheduling for a specific application, and an activity level.

4. The method of controlling the change of the transmission parameter as claimed in claim 1, wherein the layer or sublayer is an RLC layer, and wherein an RLC control protocol data unit (PDU) is generated, which does not include a specification of a change timing for changing a parameter value of a transmission parameter for which processing all within the RLC layer is possible.

5. The method of controlling the change of the transmission parameter as claimed in claim 4, wherein the transmission parameter for which processing all within the RLC layer is possible includes service quality setting information and retransmission control setting information for controlling retransmission in the RLC layer.

6. The method of controlling the change of the transmission parameter as claimed in claim 1, wherein, when the control data unit is generated in the first half of a current transmission frame (#N-l), the control data unit is transmitted in the first half of the current transmission frame (#N-l), and data is transmitted and/or received at the following frame (#N) timing based on the changed transmission parameter.

7. The method of controlling the change of the transmission parameter as claimed in claim 1, wherein, when the control data unit is generated in the second half of the current transmission frame (#N-1), the control data unit is transmitted in the first half of the following transmission frame (#N), and data is transmitted and/or received based on the changed transmission parameter, starting in the further following frame (#N+1).

8. The method of controlling the change of the transmission parameter as claimed in claim 1, wherein retransmission is conducted in the second half of a frame in which the control PDU was transmitted.

9. A radio base station, comprising;
a controller which instructs changing a parameter value for a transmission parameter for which processing all within a certain layer or sublayer is possible;
a control data unit generator which, based on the instruction of the controller, generates a control data unit which indicates the changed parameter and which does not include a specification of a change timing; and
a transmission processor which transmits the control data unit only in the first half of a transmission frame.

10. The radio base station as claimed in claim 9, further including a retransmission controller which, when retransmitting of the control data unit is needed, instructs retransmission in a second halt of a frame in which the control data unit was transmitted.

11. The radio base station &S claimed in claim 9, wherein the controller is a MAC controller which instructs changing a parameter for a transmission parameter for which processing all within a MAC layer is possible; and
wherein the control data unit generator generates a MAC control protocol data unit (PDU)

12. The radio base station as claimed in claim 9, wherein the controller is an RLC controller which instructs changing a parameter for a transmission parameter for which processing all within an RLC layer is possible; and
wherein the control data unit generator generates an RLC control protocol data unit (PDU).

13. The radio base station as claimed in claim 9, further including starting transmitting and/or receiving, at a timing of a frame following a frame in which the control data unit was transmitted, data based on the changed transmission parameter.
